(19) **Europäisches Patentamt / European Patent Office / Office européen des brevets**

(11) **EP 4 667 506 A1**

(12) **EUROPEAN PATENT APPLICATION**
published in accordance with Art. 153(4) EPC

(43) Date of publication:
**24.12.2025 Bulletin 2025/52**

(21) Application number: **24811360.7**

(22) Date of filing: **20.05.2024**

(51) International Patent Classification (IPC):
**C08G 63/16** $^{(2006.01)}$    **B29C 49/00** $^{(2006.01)}$

(52) Cooperative Patent Classification (CPC):
**B29C 49/00; C08G 63/16**

(86) International application number:
**PCT/KR2024/006790**

(87) International publication number:
**WO 2024/242421 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.05.2023 KR 20230066551**

(71) Applicant: **SK Chemicals Co., Ltd.**
**Seongnam-si, Gyeonggi-do 13494 (KR)**

(72) Inventors:
• **HWANG, Da-Young**
  **Seongnam-si, Gyeonggi-do 13494 (KR)**
• **OH, Hyun-Woo**
  **Seongnam-si, Gyeonggi-do 13494 (KR)**
• **LEE, Yoo Jin**
  **Seongnam-si, Gyeonggi-do 13494 (KR)**

(74) Representative: **Dehns**
  **10 Old Bailey**
  **London EC4M 7NG (GB)**

(54) **POLYESTER RESIN AND MOLDED ARTICLE MANUFACTURED THEREFROM**

(57)    The present invention relates to a polyester resin and a molded article manufactured therefrom. The polyester resin has a specific viscosity controlled within a specific range, and thus can have excellent processability in an extrusion blow molding process.

EP 4 667 506 A1

## Description

**Technical Field**

The present invention relates to a polyester resin that can exhibit excellent processability when applied to an extrusion blow molding process, and to a molded article prepared using the polyester resin through an extrusion blow molding process.

**Background Art**

Polyester resins are obtained by a polymerization reaction of a dicarboxylic acid component and a diol component. Since they do not contain substances harmful to the human body and are environmentally friendly, they are widely used in the manufacture of films, partitions, panels, packaging materials, containers, and the like. In particular, a polyethylene terephthalate resin, among polyester resins, is mainly used in the manufacture of small or large containers for containing fruit drinks, soft drinks, carbonated drinks, water, and the like.

These polyester resins have a level of melt viscosity required for a sheet molding process using injection and/or calender rolls, while the level of melt viscosity is relatively low to be adopted in an extrusion blow molding process for molding containers.

In this regard, in U.S. Patent No. 4,217,440, the melt viscosity of a polyester resin is increased by employing a polyfunctional modifier into the polyester resin. In such a case, the molecular weight can be increased by branching, resulting in an increase in melt viscosity, but this causes the melt pressure to increase during molding. As a result, when a polyester resin with a multifunctional modifier is used in an extrusion blow molding process, the melt pressure is higher than that of typical polyester resins, which causes an increase in RPM; thus, it is difficult to expect an effect of improvement in efficiency by shortening the cycle time.

Accordingly, there is a need to develop a technology that can enhance processability wherein, when a polyester resin is fed to an extrusion blow molding process for molding containers, the polyester resin has the required level of melt viscosity even if it is not modified with a multifunctional modifier.

[Prior Art Document]

[Patent Document]

(Patent Document 1) U.S. Patent No. 4,217,440

Disclosure of Invention

Technical Problem

In order to solve the above-mentioned problems in the prior art, the present inventors have conducted various studies. As a result, it has been discovered that, when the specific viscosity of a polyester resin at a specific temperature is controlled, processability in an extrusion blow molding process is enhanced, and molded articles with high quality can be obtained. In particular, it has been also confirmed that the present invention can ensure the processability of a polyester resin comprising recycled raw materials.

Accordingly, an object of the present invention is to provide a polyester resin with excellent processability (moldability) in an extrusion blow molding process.

In addition, another object of the present invention is to provide a molded article with high quality prepared from the polyester resin.

**Solution to Problem**

In order to accomplish the above object, the present invention provides a polyester resin, which comprises a diol repeat unit derived from a diol component; and a dicarboxylic acid repeat unit derived from a dicarboxylic acid component, wherein, when the polyester resin is analyzed by differential scanning calorimetry (DSC) while the temperature is raised to 280°C at a scan rate of 10°C/minute, a melting point ($T_m$) appears, and the following Relationship 1 is satisfied:

[Relationship 1]

$$10 < X_0/Y_2 < 50$$

In Relationship 1, $X_0$ is the zero shear viscosity of the polyester resin at an angular frequency of 0.5 rad/s at $T_m$ - 15°C, and $Y_2$ is the shear viscosity of the polyester resin at an angular frequency of 500 rad/s at $T_m$ + 30°C.

In addition, the present invention provides a molded article, which is prepared from the polyester resin.

In addition, the present invention provides a process for preparing a molded article, which comprises feeding the polyester resin to an extruder; processing the polyester resin fed to the extruder with a barrel at a temperature higher than the melting point ($T_m$) of the polyester resin by 10 to 40°C; discharging the processed polyester resin through a die at a temperature lower than the melting point ($T_m$) of the polyester resin by 10 to 30°C to prepare a preform; and blow molding the preform.

Advantageous Effects of Invention

The polyester resin according to the present invention has crystallinity wherein the ratio between zero shear viscosity and shear viscosity at a specific temperature ($X_0/Y_2$), shear thinning, angular frequency, and the like are controlled to specific ranges. Thus, when it is adopted in an extrusion blow molding process, it can contribute to providing molded articles with excellent quality while exhibiting excellent processability.

In particular, even though the polyester resin according to the present invention contains repeat units derived from recycled raw materials (e.g., r-EG, r-CHDM, r-ISB, r-DEG, r-NPG, r-BHET, and r-TPA), it has crystallinity and the optimal level of viscosity required for each of the barrel and die of an extrusion blow molding process, resulting in excellent processability.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

For a non-crystalline polyester resin, it is possible to estimate the degree of processability to be secured during extrusion blow molding (EBM) by controlling the ratio between zero shear viscosity and shear viscosity. However, in order to perform extrusion blow molding of a crystalline polyester resin, molding (processing) must be performed at a temperature higher than the melting temperature of the crystals. The amount of heat required to melt the crystals is different from the amount of heat at the temperature at which extrusion blow molding is possible. Thus, if the ratio between zero shear viscosity and shear viscosity is simply controlled without considering the temperature at which each viscosity is measured, it is difficult to estimate whether processability is secured.

Meanwhile, when a polyester resin having crystallinity is adopted in an extrusion blow molding process to prepare a molded article, a molded article with excellent quality (e.g., thermal resistance, mechanical strength, appearance, and the like) can be prepared.

Accordingly, the present invention is characterized in that, in order to ensure processability during extrusion blow molding of a crystalline polyester resin, the ratio between zero shear viscosity and shear viscosity at a specific temperature, not an arbitrary temperature, and further, shear thinning, angular frequency, and the like are controlled. As a result, it is possible to provide molded articles with excellent quality, which will be described in detail as follows.

**Polyester resin**

The polyester resin according to the present invention comprises a diol repeat unit derived from a diol component; and a dicarboxylic acid repeat unit derived from a dicarboxylic acid component. Since it has crystallinity, a melting point ($T_m$) appears. Specifically, when the polyester resin according to the present invention is analyzed (first scanned) by differential scanning calorimetry (DSC) while the temperature is raised to 280°C at a scan rate of 10°C/minute, one melting point ($T_m$) may appear.

The melting point ($T_m$) of the polyester resin according to the present invention is not particularly limited, but it may be 210 to 260°C. Specifically, the melting point ($T_m$) may be 215 to 260°C, 218 to 258°C, 220 to 255°C, 221 to 254°C, 223 to 253°C, 224 to 251°C, or 225 to 250°C. As the melting point ($T_m$) is within the above temperature range, the crystallinity of the polyester resin may be high.

The differential scanning calorimeter (DSC) may be specifically a modulated differential scanning calorimeter (modulated DSC or MDSC), more specifically a temperature-modulated differential scanning calorimeter (TMDSC).

The polyester resin according to the present invention satisfies the following Relationship 1.

$$[\text{Relationship 1}]$$

$$10 < X_0/Y_2 < 50$$

In Relationship 1, $X_0$ is the zero shear viscosity of the polyester resin at an angular frequency of 0.5 rad/s at $T_m -$ 15°C, and $Y_2$ is the shear viscosity of the polyester resin at an angular frequency of 500 rad/s at $T_m$ + 30°C.

In Relationship 1, the zero shear viscosity may be defined as the viscosity of the polyester resin in a low shear rate region (the viscosity when the shear rate is gradually lowered to approach 0 at which a constant viscosity value is maintained), and the shear viscosity may be defined as the viscosity of the polyester resin in a high shear rate region.

As described above, the polyester resin of the present invention has the characteristic that the ratio between zero shear viscosity and shear viscosity measured at a specific temperature ($X_0/Y_2$) satisfies the range of Relationship 1. Specifically, in $X_0$, $T_m$ - 15°C is the temperature obtained by subtracting 15°C from the melting point ($T_m$) of the polyester resin, which is a temperature at which it can be confirmed whether the melt strength of the polyester resin is secured. That is, as the zero shear viscosity of the polyester resin at a specific temperature of $T_m$ - 15°C is measured, it is possible to confirm whether the melt strength of the polyester resin required in an extrusion blow molding process (e.g., die extrusion process) is secured, thereby enhancing processability. In addition, in $Y_2$, $T_m$ + 30°C is the temperature obtained by adding 30°C to the melting point ($T_m$) of the polyester resin, which may be a temperature for converting the polyester resin to a non-crystalline state. That is, in order to accurately measure the shear viscosity of the polyester resin, it is required that the polyester resin be without crystallinity. For this purpose, the present invention specifies the temperature at which the polyester resin completely melts and becomes non-crystalline as $T_m$ + 30°C, and the shear viscosity is measured at the temperature of $T_m$ + 30°C.

As the ratio between zero shear viscosity and shear viscosity measured at a specific temperature ($X_0/Y_2$) is controlled to the above specific range in the present invention, a polyester resin with excellent processability in an extrusion blow molding process can be provided. In particular, as the ratio between zero shear viscosity and shear viscosity of the polyester resin is controlled to the above specific range, it is possible to easily mold small molded articles and large molded articles through an extrusion blow molding process.

The ratio ($X_0/Y_2$) may specifically be 10.5 or more, 11 or more, 12 or more, 13 or more, 14 or more, 15 or more, 18 or more, 20 or more, 23 or more, or 25 or more, and 49.5 or less, 49 or less, 48.5 or less, 48 or less, 47 or less, 45 or less, 43 or less, 40 or less, 38 or less, 37 or less, 36 or less, or 35 or less. For example, the ratio ($X_0/Y_2$) may be $10.5 \leq X_0/Y_2 \leq 49.5$, $11 \leq X_0/Y_2 \leq 49$, $11.5 \leq X_0/Y_2 \leq 48.5$, $12 \leq X_0/Y_2 \leq 48$, $13 \leq X_0/Y_2 \leq 47$, $14 \leq X_0/Y_2 \leq 45$, $16 \leq X_0/Y_2 \leq 43$, $18 \leq X_0/Y_2 \leq 42$, $19 \leq X_0/Y_2 \leq 40$, $21 \leq X_0/Y_2 \leq 38$, or $22 \leq X_0/Y_2 \leq 35$.

Meanwhile, the zero shear viscosity of the polyester resin measured at an angular frequency of 0.5 rad/s may refer to the viscosity of the polyester resin in the die during an extrusion blow molding process, and the shear viscosity of the polyester resin measured at an angular frequency of 500 rad/s may refer to the viscosity of the polyester resin in the barrel during the extrusion blow molding process. That is, in the present invention, the polyester resin is controlled to have a specific viscosity (zero shear viscosity and shear viscosity) when it passes through the barrel and when it passes through the die. As a result, processability in an extrusion molding process can be significantly enhanced.

Specifically, the polyester resin may have a zero shear viscosity of 10,000 to 65,000 Pa·s, 15,000 to 60,000 Pa·s, 16,000 to 59,000 Pa·s, 17,000 to 57,000 Pa·s, 18,000 to 56,000 Pa·s, 19,000 to 55,000 Pa·s, or 20,000 to 54,000 Pa·s. In addition, the polyester resin may have a shear viscosity of 300 to 2,000 Pa·s, 350 to 1,950 Pa·s, 400 to 1,900 Pa·s, 450 to 1,850 Pa·s, 500 to 1,800 Pa·s, 600 to 1,700 Pa·s, or 700 to 1,600 Pa·s.

The polyester resin according to the present invention may have a shear thinning ($ST_{Tm+30°C}$) of 4 to 15 at $T_m$ + 30°C as represented by the following Relationship 2. Specifically, the shear thinning ($ST_{Tm+30°C}$) at $T_m$ + 30°C may be 4.2 to 14.8, 4.3 to 14.5, 4.5 to 14.3, 4.8 to 14.1, 4.9 to 14, 5 to 13.8, 5 to 13.6, 5.5 to 13.5, or 6 to 13.

$$[\text{Relationship 2}]$$

$$ST_{Tm+30°C} = Y_1/Y_2$$

In Relationship 2, $Y_1$ is the shear viscosity of the polyester resin at an angular frequency of 0.5 rad/s at $T_m$ + 30°C,

and $Y_2$ is the shear viscosity of the polyester resin at an angular frequency of 500 rad/s at $T_m$ + 30°C.

In addition, the polyester resin according to the present invention may have a shear thinning ($ST_{Tm-15°C}$) of 15 to 30 at $T_m$ - 15°C as represented by the following Relationship 3. Specifically, the shear thinning ($ST_{Tm-150°C}$) at $T_m$ - 15°C may be 15.3 to 30, 15.5 to 30, 16 to 30, 16.3 to 30, 16.5 to 30, 16.8 to 29.8, 17 to 29.5, 17.3 to 29.3, 17.5 to 29, or 18 to 28.8.

## [Relationship 3]

$$ST_{Tm-15°C} = X_1/X_2$$

In Relationship 3, $X_1$ is the shear viscosity of the polyester resin at an angular frequency of 0.5 rad/s at $T_m$ - 15°C, and $X_2$ is the shear viscosity of the polyester resin at an angular frequency of 500 rad/s at $T_m$ - 15°C.

As the shear thinning values ($ST_{Tm+30°C}$ and $ST_{Tm-15°C}$) of the polyester resin at $T_m$ + 30°C and $T_m$ - 15°C are each within the above range, a polyester resin with excellent processability in an extrusion blow molding process can be provided.

The polyester resin according to the present invention may have an angular frequency of 200 rad/s or less when the tandelta (TD) at $T_m$ - 15°C is 1 as represented by the following Relationship 4. Specifically, the angular frequency may be 5 to 200 rad/s, 7 to 200 rad/s, 9 to 200 rad/s, 10 to 200 rad/s, 11 to 200 rad/s, 12 to 199 rad/s, 13 to 199 rad/s, 14 to 199 rad/s, 18 to 199 rad/s, or 19 to 199 rad/s. As the angular frequency is within the above range, the melt strength required in an extrusion blow molding process is secured, and the elasticity of the polyester resin is prevented from deteriorating; thus, it is possible to provide molded articles with high quality while the processability of the polyester resin is increased. In particular, even if the polyester resin has crystallinity and comprises repeat units derived from recycled raw materials (e.g., r-TPA, r-BHET, r-CHDM, r-EG, r-NPG, r-DEG, and r-ISB), as the angular frequency is controlled to a low value of 200 rad/s or less, processability in an extrusion blow molding process can be secured.

## [Relationship 4]

$$TD = LM/SM$$

In Relationship 4, LM is the loss modulus of the polyester resin at $T_m$ - 15°C, and SM is the storage modulus of the polyester resin at $T_m$ - 15°C.

According to the present invention, the polyester resin comprises a diol repeat unit derived from a diol component. The diol component is not particularly limited as long as it is a commonly known diol component. Specifically, it may comprise at least one (specifically, 2 or more, 3 or more, or 4 or more) selected from the group consisting of ethylene glycol, cyclohexanedimethanol, isosorbide, diethylene glycol, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate (CHDM derivative), 4-(4-(hydroxymethyl)cyclohexylmethoxymethyl)cyclohexylmethanol (CHDM derivative), bis(2-hydroxyethyl) terephthalate, recycled ethylene glycol (r-EG), recycled cyclohexanedimethanol (r-CHDM), recycled isosorbide (r-ISB), recycled diethylene glycol (r-DEG), recycled neopentyl glycol (r-NPG), and recycled bis(2-hydroxyethyl) terephthalate (r-BHET).

More specifically, the diol component may comprise a first diol component comprising at least one selected from the group consisting of ethylene glycol and recycled ethylene glycol (r-EG); and a second diol component comprising at least one (e.g., 2 or more or 3 or more) selected from the group consisting of cyclohexanedimethanol, isosorbide, diethylene glycol, neopentyl glycol, bis-2-hydroxyethyl terephthalate, recycled cyclohexanedimethanol (r-CHDM), recycled isosorbide (r-ISB), recycled diethylene glycol (r-DEG), recycled neopentyl glycol (r-NPG), and recycled bis-2-hydroxyethyl terephthalate (r-BHET).

The content of the first diol component contained in the diol component is not particularly limited, but it may be 50 to 99% by mole, 60 to 99% by mole, 70 to 99% by mole, 75 to 98% by mole, or 75 to 97% by mole, based on the total percent by mole of the diol component. Accordingly, the polyester resin may comprise a repeat unit (a) derived from the first diol component. As the amount of the first diol component used is within the above range, a polyester resin with excellent basic physical properties can be produced economically.

The content of the second diol component contained in the diol component is not particularly limited, but it may be 5 to 99% by mole, 5.5 to 98% by mole, 6 to 97% by mole, 6 to 90% by mole, or 6 to 85% by mole, based on the total percent by mole of the diol component. Accordingly, the polyester resin may comprise a repeat unit (b) derived from the second diol component. As the amount of the second diol component used is within the above range, it is possible to prepare a polyester resin having the required level of viscosity in an extrusion blow molding process. As a result, molded articles with excellent quality can be provided.

In particular, the second diol component may comprise recycled bis-2-hydroxyethyl terephthalate (r-BHET), which is a recycled raw material. As a result, the polyester resin may comprise a repeat unit (c) derived from a recycled raw material. The amount of recycled bis-2-hydroxyethyl terephthalate (r-BHET) used is not particularly limited, but it may be 20 to 99% by mole, 30 to 98% by mole, 40 to 97% by mole, 40 to 95% by mole, or 40 to 90% by mole, based on the total percent by mole of the diol component, in light of the basic physical properties and processability of the polyester resin.

In addition, the second diol component may comprise cyclohexanedimethanol or recycled cyclohexanedimethanol. As a result, the polyester resin may comprise a repeat unit (e) derived from cyclohexanedimethanol or recycled cyclohexanedimethanol. The amount of cyclohexanedimethanol or recycled cyclohexanedimethanol used is not particularly limited, but it may be 2 to 15% by mole, 2 to 14% by mole, 3 to 14% by mole, 3 to 13% by mole, or 3 to 12% by mole, based on the total percent by mole of the diol component, in light of the basic physical properties and processability of the polyester resin.

In addition, the second diol component may comprise isosorbide or recycled isosorbide. As a result, the polyester resin may comprise a repeat unit (f) derived from isosorbide or recycled isosorbide. The amount of isosorbide or recycled isosorbide used is not particularly limited, but it may be 0.1 to 15% by mole, 0.1 to 13% by mole, 0.5 to 10% by mole, 0.5 to 9% by mole, or 0.5 to 8% by mole, based on the total percent by mole of the diol component, in light of the basic physical properties and processability of the polyester resin.

In addition, the second diol component may comprise diethylene glycol or recycled diethylene glycol. As a result, the polyester resin may comprise a repeat unit (g) derived from diethylene glycol or recycled diethylene glycol. The amount of diethylene glycol or recycled diethylene glycol used is not particularly limited, but it may be 1 to 15% by mole, 1 to 13% by mole, 1 to 10% by mole, 1.5 to 9% by mole, 1.5 to 8% by mole, 1.5 to 7% by mole, or 2 to 6% by mole, based on the total percent by mole of the diol component, in light of the basic physical properties and processability of the polyester resin.

In addition, the second diol component may comprise neopentyl glycol or recycled neopentyl glycol. As a result, the polyester resin may comprise a repeat unit (h) derived from neopentyl glycol or recycled neopentyl glycol. The amount of neopentyl glycol or recycled neopentyl glycol used is not particularly limited, but it may be 0.5 to 15% by mole, 0.5 to 13% by mole, 1 to 10% by mole, 1.5 to 9% by mole, 2 to 8% by mole, 3 to 7% by mole, or 3 to 6% by mole, based on the total percent by mole of the diol component, in light of the basic physical properties and processability of the polyester resin.

According to the present invention, the polyester resin comprises a dicarboxylic acid repeat unit derived from a dicarboxylic acid component. The dicarboxylic acid component is not particularly limited as long as it is a commonly known dicarboxylic acid component. Specifically, it may comprise at least one selected from the group consisting of recycled terephthalic acid (r-TPA), terephthalic acid, isophthalic acid, dimethyl phthalate, dimethyl isophthalate, dimethyl terephthalate, phthalic acid, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

More specifically, the dicarboxylic acid component may comprise recycled terephthalic acid (r-TPA), terephthalic acid, isophthalic acid, dimethyl terephthalate, or a combination thereof.

Meanwhile, recycled ethylene glycol (r-EG), recycled cyclohexanedimethanol (r-CHDM), recycled isosorbide (r-ISB), recycled diethylene glycol (r-DEG), and recycled neopentyl glycol (r-NPG), and recycled bis-2-hydroxyethyl terephthalate (r-BHET) used as the diol components, and recycled terephthalic acid (r-TPA) used as the dicarboxylic acid component may refer to recycled raw materials (monomers) obtained from waste polyester resins or waste polyester products after use through a commonly known depolymerization process.

The polyester resin according to the present invention may further comprise a repeat unit (d) derived from a branching agent having 3 or more functional groups. By virtue of the branching agent, the polyester resin can have a high molecular weight and high crystallinity as the repeat unit (d) is introduced into a side chain of the main chain, or a graft polymerization structure is formed by the repeat unit (d).

The content of the repeat unit (d) contained in the polyester resin is not particularly limited, but it may be 0.005 to 15% by weight, specifically, 0.005 to 13% by weight, 0.01 to 12% by weight, 0.01 to 10% by weight, or 0.02 to 5% by weight, based on the total percent by weight of the diol repeat unit.

The branching agent is not particularly limited, but it may specifically be trimellitic acid, trimellitic anhydride, trimethylol propane, or a combination thereof.

The polyester resin according to the present invention may have an intrinsic viscosity (IV) at 35°C of 0.6 to 1.4 dl/g. Specifically, the melt intrinsic viscosity (melt IV) of the polyester resin at 35°C may be 0.6 to 1.0 dl/g, 0.62 to 0.97 dl/g, 0.64 to 0.94 dl/g, or 0.65 to 0.90 dl/g. In addition, the solid-phase intrinsic viscosity (solid-phase IV) of the polyester resin at 35°C may be 0.8 to 1.4 dl/g, 0.85 to 1.38 dl/g, 0.9 to 1.35 dl/g, or 0.93 to 1.32 dl/g. The melt intrinsic viscosity is the intrinsic viscosity of the polyester resin measured when it is obtained after the polycondensation (melt polymerization) (before the solid-state polymerization). The solid-state intrinsic viscosity is the intrinsic viscosity of the polyester resin measured when it is obtained after the polycondensation (melt polymerization) and solid-state polymerization.

The polyester resin according to the present invention may be in the form of chips, pellets, or powder.

The polyester resin according to the present invention may be a homopolymer or a copolymer. Specifically, the polyester resin may be selected from the group consisting of polyethylene terephthalate (PET), polyethylene terephthalate glycol (PETG), polyester sulfone (PES), polybutylene terephthalate (PBT), polytrimethylene terephthalate (PTT), polybutylene adipate-co-terephthalate (PBAT), polypropylene adipate-co-terephthalate (PPAT), polycyclohexane dimethyl terephthalate (PCT), and thermoplastic polyester elastomer (TPEE).

**Process for preparing a polyester resin**

The polyester resin according to the present invention may be prepared through an esterification reaction, or a transesterification reaction, followed by a polycondensation reaction, as commonly known. Specifically, the process for preparing a polyester resin according to the present invention may comprise feeding a diol component and a dicarboxylic acid component to a reactor (S-1); subjecting the diol component and the dicarboxylic acid component to an esterification reaction to prepare an oligomer (S-2); and subjecting the oligomer to a polycondensation reaction (S-3), which will be described in detail as follows.

Step (S-1): Feeding of raw materials

Step (S-1) is a step of feeding a diol component and a dicarboxylic acid component to a reactor. Since the diol component and the dicarboxylic acid component are the same as described above, a description thereon is omitted.

When the diol component and the dicarboxylic acid component are fed to a reactor, the feeding molar ratio thereof (the number of moles of the diol component to the number of moles of the dicarboxylic acid component) is not particularly limited, but it may be 1.1 to 2.0, 1.15 to 2.0, 1.15 to 1.9, 1.2 to 1.8, or 1.2 to 1.7, in light of the efficiency of the esterification reaction and the polycondensation reaction described later.

A batch reactor or a continuous reactor may be used as the reactor.

Meanwhile, at least one additive selected from the group consisting of a catalyst, a colorant, a crystallizing agent, an antioxidant, and a branching agent may be fed to the reactor.

The catalyst may be methylates of sodium and magnesium; acetates, borates, fatty acid salts, or carbonates of Zn, Cd, Mn, Co, Ca, and Ba; and oxides or hydrates of Mg, Pb, Mn, Ti, Sb, Sn, Al, and Ge. For example, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isosteatyl titanate, titanium dioxide, germanium dioxide, germanium tetrachloride, germanium ethyleneglycoxide, germanium acetate, or combinations thereof.

As the colorant, organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clariant, and Solvaperm Red BB toner of Clariant) may be used.

As the crystallizing agent, a crystal nucleating agent, an ultraviolet absorber, a polyolefin resin, a polyamide resin, or the like may be used.

As the antioxidant, hindered phenol-based compounds, phosphite-based compounds, thioether-based compounds, or the like may be used.

As the branching agent, trimellitic acid, trimellitic anhydride, trimethylol propane, or a combination thereof as described above may be used.

Step (S-2): Esterification reaction

Step (S-2) is a step of subjecting the diol component and the dicarboxylic acid component to an esterification reaction to prepare an oligomer. The conditions under which the esterification reaction is carried out may not be particularly limited.

Specifically, the temperature at which the esterification reaction is carried out may be 210 to 300°C, 215 to 290°C, 220 to 280°C, 230 to 275°C, 235 to 270°C, or 240 to 265°C. In addition, the pressure at which the esterification reaction is carried out may be 0.05 to 5 kgf/cm$^2$, 0.1 to 4 kgf/cm$^2$, 0.1 to 3 kgf/cm$^2$, 0.1 to 2.5 kgf/cm$^2$, or 0.5 to 2 kgf/cm$^2$. As the esterification reaction is carried out under the above conditions, the production of side reactants is minimized while an oligomer having the desired molecular weight can be obtained in high yield.

Step (S-3): Polycondensation reaction

Step (S-3) is a step of subjecting the oligomer to a polycondensation reaction. The conditions under which the polycondensation reaction is carried out may not be particularly limited.

Specifically, the temperature at which the polycondensation reaction is carried out may be 230 to 320°C, 235 to 310°C, 240 to 300°C, 245 to 295°C, or 250 to 290°C. In addition, the pressure under which the polycondensation reaction is carried out may be lower (reduced pressure) than normal pressure (e.g., 1 atm). As the polycondensation reaction is performed under the above conditions, a polyester resin (polymer) having crystallinity and ensuring excellent process-sability in an extrusion blow molding process can be efficiently produced.

Meanwhile, if necessary, the process for preparing a polyester resin according to the present invention may further comprise subjecting the reactant obtained through the polycondensation reaction **in** step (S-3) to a solid-state polymerization reaction in order to control the intrinsic viscosity (IV), molecular weight, and the like of the reactant. The solid-state polymerization reaction conditions are not particularly limited and may be appropriately set depending on the intrinsic viscosity, molecular weight, and the like of the desired polyester resin.

**Molded article (product)**

The molded article according to the present invention is prepared from the polyester resin described above. Specifically, the molded article according to the present invention may be obtained by molding the polyester resin using an extrusion blow molding process.

Since the molded article is prepared from the polyester resin described above, it may have excellent quality (e.g., thermal resistance, mechanical strength, appearance, and the like). In addition, since the molded article is prepared from the polyester resin described above, the efficiency of a recycling process may also be excellent when the recycling process is carried out after completion of use.

The molded article is not particularly limited, but it may be a small container or a large container containing fruit drinks, soft drinks, carbonated drinks, water, and the like. For example, the molded article may be a PET bottle.

Process for preparing a molded article (product)

The process for preparing a molded article according to the present invention comprises feeding the polyester resin to an extruder (A); processing the polyester resin fed to the extruder with a barrel at a temperature higher than the melting point ($T_m$) of the polyester resin by 10 to 40°C (B); discharging the processed polyester resin through a die at a temperature lower than the melting point ($T_m$) of the polyester resin by 10 to 30°C to prepare a preform (C); and blow molding the preform (D), which will be described in detail as follows.

Step (A): Feeding to an extruder

Step (A) is a step of feeding the polyester resin to an extruder. The polyester resin may be a polyester resin in which the ratio between zero shear viscosity and shear viscosity at a specific temperature ($X_0/Y_2$), shear thinning, angular frequency, and the like are controlled as described above. Meanwhile, the extruder to which the polyester resin is fed may be a single-screw extruder or a twin-screw extruder conventionally known.

Step (B): Barrel processing

Step (B) is a step of processing the polyester resin fed to the extruder with a barrel at a temperature higher than the melting point ($T_m$) of the polyester resin by 10 to 40°C. Specifically, the processing of the polyester resin with a barrel may be carried out at a temperature higher than the melting point ($T_m$) of the polyester resin by 10 to 35°C, 15 to 35°C, or 15 to 30°C. As the processing is carried out in the above temperature range, the processability of the polyester resin is significantly enhanced, making it possible to provide molded articles with excellent quality.

Step (C): Die molding

Step (C) is a step of discharging the processed polyester resin through a die at a temperature lower than the melting point (Tm) of the polyester resin by 10 to 30°C to prepare a preform (e.g., parison). Specifically, the discharging of the polyester resin through a die may be carried out at a temperature lower than the melting point ($T_m$) of the polyester resin by 10 to 29°C, 13 to 28°C, or 15 to 27°C. As the discharging is carried out in the above temperature range, the processability of the polyester resin is significantly enhanced, making it possible to provide molded articles with excellent quality.

Step (D): Blow molding

Step (D) is a step of blow molding the preform (D). The blow molding the preform may be carried out by a conventionally known method.

As a molded article is prepared through steps (A) to (D) described above, the present invention can prepare a molded article having excellent quality with high efficiency. In particular, as the process temperature in each of the barrel and die is controlled to a specific temperature range in the present invention, it is possible to easily mold small molded articles and large molded articles with excellent processability.

**Mode for the Invention**

Hereinafter, the present invention will be described in more detail with reference to embodiments. However, these examples are provided only for illustration purposes, and the present invention is not limited thereto.

**[Example 1]**

A 10-liter reactor equipped with a column and a condenser that can be cooled by water was charged with recycled bis-2-hydroxyethyl terephthalate (r-BHET, 1,257.6 g), recycled terephthalic acid (r-TPA, 3,287.5 g), isosorbide (ISB, 51.6 g), ethylene glycol (EG, 1,318.5 g), recycled 1,4-cyclohexanedimethanol (r-CHDM, 356.5 g), diethylene glycol (DEG, 70.0 g), a Ge catalyst (1.0 g), a Ti catalyst (1.0 g), phosphoric acid (1.5 g), a blue toner (0.005 g), and a red toner (0.003 g). Next, after the temperature of the reactor was raised to 265°C, an esterification reaction (ES) was carried out at 265°C under a pressure of 2 kgf/cm$^2$ to obtain a transparent reactant.

Subsequently, the reactant was transferred to a polycondensation reactor, and a polycondensation reaction (PA) was then carried out at 270°C while the pressure of the polycondensation reactor was maintained at a pressure lower than normal pressure. When the intrinsic viscosity (IV) of the reactant in the polycondensation reactor reached 0.77 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 210°C under a nitrogen atmosphere, and a solid-state polymerization reaction was then carried out at 210°C. When the intrinsic viscosity (IV) of the reactant in the solid-state polymerization reactor reached 1.25 dl/g, the reactant was discharged from the solid-state polymerization reactor to prepare a polyester resin (copolymer).

**[Example 2]**

A 10-liter reactor equipped with a column and a condenser that can be cooled by water was charged with recycled terephthalic acid (r-TPA, 4,231.2 g), ethylene glycol (EG, 2,437.2 g), 1,4-cyclohexanedimethanol (CHDM, 163.1 g), diethylene glycol (DEG, 36.0 g), a Ti catalyst (1.0 g), phosphoric acid (1.5 g), a blue toner (0.005 g), a red toner (0.005 g), and a branching agent (trimellytic anhydride, 0.5 g). Next, after the temperature of the reactor was raised to 255°C, an esterification reaction (ES) was carried out at 255°C under a pressure of 1 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.65 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 220°C under a nitrogen atmosphere, and a solid-state polymerization reaction was then carried out at 220°C. When the intrinsic viscosity (IV) of the reactant in the solid-state polymerization reactor reached 0.95 dl/g, the reactant was discharged from the solid-state polymerization reactor to prepare a polyester resin (copolymer).

**[Example 3]**

A 10-liter reactor equipped with a column and a condenser that can be cooled by water was charged with recycled bis-2-hydroxyethyl terephthalate (r-BHET, 637.7 g), terephthalic acid (TPA, 3,751.1 g), recycled ethylene glycol (r-EG, 1,515.2 g), 1,4-cyclohexanedimethanol (CHDM, 160.7 g), recycled neopentyl glycol (r-NPG, 145.1 g), diethylene glycol (DEG, 71.0 g), a Ti catalyst (1.0 g), phosphoric acid (1.5 g), a blue toner (0.01 g), and a red toner (0.005 g). Next, after the temperature of the reactor was raised to 255°C, an esterification reaction (ES) was carried out at 255°C under a pressure of 0.5 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.9 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 190°C under a nitrogen atmosphere, and a solid-state polymerization reaction was then carried out at 190°C. When the intrinsic viscosity (IV) of the reactant in the solid-state polymerization reactor reached 1.2 dl/g, the reactant was discharged from the solid-state polymerization reactor to prepare a polyester resin (copolymer).

**[Example 4]**

A 10-liter reactor equipped with a column and a condenser that can be cooled by water was charged with terephthalic acid (TPA, 4,051.1 g), isophthalic acid (IPA, 213.2 g), ethylene glycol (EG, 2,643.9 g), recycled diethylene glycol (r-DEG, 108.9 g), a Ge catalyst (1.0 g), phosphoric acid (1.5 g), a blue toner (0.025 g), and a red toner (0.01 g). Next, after the temperature of the reactor was raised to 260°C, an esterification reaction (ES) was carried out at 260°C under a pressure of 1 kgf/cm$^2$ to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (IV) of the reactant in the polycondensation reactor reached 0.78 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 205°C under a nitrogen atmosphere, and a solid-state polymerization reaction was then carried out at 205°C. When the intrinsic viscosity (IV) of the reactant in the solid-state polymerization reactor reached 1.3 dl/g, the reactant was discharged from the solid-state polymerization reactor to prepare a polyester resin (copolymer).

**[Example 5]**

A 10-liter reactor equipped with a column and a condenser that can be cooled by water was charged with dimethyl phthalate (DMT, 4,115.4 g), recycled isosorbide (r-ISB, 258.5 g), ethylene glycol (EG, 2,537.4 g), 1,4-cyclohexanedimethanol (CHDM, 158.7 g), diethylene glycol (DEG, 87.6 g), an Mn catalyst (Mn (II) acetate tetrahydrate, 1.5 g), an Sb catalyst (Sb$_2$O$_3$, 1.8 g), phosphoric acid (1.5 g), and cobalt acetate (0.4 g). Next, after the temperature of the reactor was raised to 240°C, an esterification reaction (ES) was carried out at 240°C under a pressure of 0.1 kgf/cm$^2$ to obtain a transparent reactant.

Subsequently, the reactant was transferred to a polycondensation reactor, and a polycondensation reaction (PA) was then carried out at 255°C while the pressure of the polycondensation reactor was maintained at a pressure lower than normal pressure. When the intrinsic viscosity (IV) of the reactant in the polycondensation reactor reached 0.85 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 230°C under a nitrogen atmosphere, and a solid-state polymerization reaction was then carried out at 230°C. When the intrinsic viscosity (IV) of the reactant in the solid-state polymerization reactor reached 1.09 dl/g, the reactant was discharged from the solid-state polymerization reactor to prepare a polyester resin (copolymer).

**[Example 6]**

A 10-liter reactor equipped with a column and a condenser that can be cooled by water was charged with recycled bis-2-hydroxyethyl terephthalate (r-BHET, 2,562.8 g), terephthalic acid (TPA, 2,512.4 g), isosorbide (ISB, 26.3 g), ethylene glycol (EG, 1,114.9 g), 1,4-cyclohexanedimethanol (CHDM, 242.2 g), diethylene glycol (DEG, 35.7 g), a Ge catalyst (1.0 g), phosphoric acid (1.5 g), cobalt acetate (0.2 g), a blue toner (0.015 g), a red toner (0.005 g), and a branching agent (trimellytic anhydride, 9 g). Next, after the temperature of the reactor was raised to 250°C, an esterification reaction (ES) was carried out at 250°C under a pressure of 1 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.85 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 220°C under a nitrogen atmosphere, and a solid-state polymerization reaction was then carried out at 220°C. When the intrinsic viscosity (IV) of the reactant in the solid-state polymerization reactor reached 1.05 dl/g, the reactant was discharged from the solid-state polymerization reactor to prepare a polyester resin (copolymer).

**[Comparative Example 1]**

A 10-liter reactor equipped with a column and a condenser that can be cooled by water was charged with recycled bis-2-hydroxyethyl terephthalate (r-BHET, 1,128.4 g), recycled terephthalic acid (r-TPA, 2,949.8 g), ethylene glycol (EG, 887.5 g), 1,4-cyclohexanedimethanol (CHDM, 1,243.9 g), diethylene glycol (DEG, 157.0 g), a Ge catalyst (1.0 g), phosphoric acid (1.5 g), a blue toner (0.005 g), and a red toner (0.005 g). Next, after the temperature of the reactor was raised to 273°C, an esterification reaction (ES) was carried out at 273°C under a pressure of 0.5 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.8 dl/g, the reactant was discharged from the polycondensation reactor to the outside to prepare a polyester resin (copolymer).

**[Comparative Example 2]**

A 10-liter reactor equipped with a column and a condenser that can be cooled by water was charged with recycled bis-2-hydroxyethyl terephthalate (r-BHET, 1,257.7 g), terephthalic acid (TPA, 3,287.8 g), ethylene glycol (EG, 1,170.0 g), 1,4-cyclohexanedimethanol (CHDM, 396.1 g), diethylene glycol (DEG, 70.0 g), a Ti catalyst (1.0 g), phosphoric acid (1.5 g), a blue toner (0.005 g), and a red toner (0.005 g). Next, after the temperature of the reactor was raised to 263°C, an esterification reaction (ES) was carried out at 263°C under a pressure of 0.5 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.7 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 230°C under a nitrogen atmosphere, and a solid-state polymerization reaction was then carried out at 230°C. When the intrinsic viscosity (IV) of the reactant in the solid-state polymerization reactor reached 1 dl/g, the reactant was discharged from the solid-state polymerization reactor to prepare a polyester resin (copolymer).

**[Comparative Example 3]**

A 10-liter reactor equipped with a column and a condenser that can be cooled by water was charged with recycled bis-2-hydroxyethyl terephthalate (r-BHET, 1,316.9 g), terephthalic acid (TPA, 3,356.5 g), isophthalic acid (IPA, 86.1 g), ethylene glycol (EG, 1,585.8 g), diethylene glycol (DEG, 36.6 g), a Ti catalyst (1.0 g), phosphoric acid (1.5 g), a blue toner (0.01 g), a red toner (0.005 g), and a branching agent (trimellytic anhydride, 1.5 g). Next, after the temperature of the reactor was raised to 270°C, and an esterification reaction (ES) was carried out at 270°C under a pressure of 0.5 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.7 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 240°C under a nitrogen atmosphere, and a solid-state polymerization reaction was then carried out at 240°C. When the intrinsic viscosity (IV) of the reactant in the solid-state polymerization reactor reached 0.8 dl/g, the reactant was discharged from the solid-state polymerization reactor to prepare a polyester resin (copolymer).

**[Comparative Example 4]**

A 10-liter reactor equipped with a column and a condenser that can be cooled by water was charged with recycled bis-2-hydroxyethyl terephthalate (r-BHET, 1,289.5 g), terephthalic acid (TPA, 3,286.6 g), isophthalic acid (IPA, 84.3 g), ethylene glycol (EG, 1,465.3 g), recycled 1,4-cyclohexanedimethanol (r-CHDM, 203.1 g), diethylene glycol (DEG, 35.9 g), a Ti catalyst (1.0 g), phosphoric acid (1.5 g), a blue toner (0.01 g), a red toner (0.005 g), and a branching agent (trimellytic anhydride, 0.25 g). Next, after the temperature of the reactor was raised to 270°C, and an esterification reaction (ES) was carried out at 270°C under a pressure of 1 kgf/cm$^2$ to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (IV) of the reactant in the polycondensation reactor reached 0.7 dl/g, the reactant was then discharged from the polycondensation reactor to the outside.

Subsequently, the reactant discharged from the polycondensation reactor was charged to a solid-state polymerization reactor. The temperature of the solid-state polymerization reactor was gradually raised to 240°C under a nitrogen atmosphere, and a solid-state polymerization reaction was then carried out at 240°C. When the intrinsic viscosity (IV) of the reactant in the solid-state polymerization reactor reached 1.2 dl/g, the reactant was discharged from the solid-state polymerization reactor to prepare a polyester resin (copolymer).

**[Test Example 1]**

The polyester resins prepared in Examples 1 to 6 and Comparative Examples 1 to 4 were each analyzed by differential scanning calorimetry (DSC) to determine whether a melting point ($T_m$) appeared. The results are shown in Table 1 below. The DSC analysis of the polyester resin was carried out as follows.

DSC analysis device: DSC 1 model of Mettler Toledo was used.

Sample preparation: About 6-10 mg of each polyester resin was taken and filled into an aluminum pan.

Scan conditions: It was heated from room temperature to 280°C at a rate of 10°C/minute, followed by annealing at 280°C for 3 minutes to obtain a DSC curve.

Confirmation of melting point ($T_m$): The temperature at which an endothermic peak appeared during the temperature elevation procedure in the obtained DSC curve was defined as the melting temperature.

**[Test Example 2]**

The polyester resins prepared in Examples 1 to 6 and Comparative Examples 1 to 4 were each measured for zero shear viscosity and shear viscosity using Physica MCR 301 equipment from Anton Paar as a plate-plate rheometer. Specifically, the plates with a diameter of 25 mm were placed in parallel at an interval of approximately 1 to 2 mm. The zero shear viscosity and shear viscosity of each polyester resin were measured while the angular frequency was changed from 0.5 rad/s to 500 rad/s under a nitrogen atmosphere and a temperature of $T_m$ + 30°C and $T_m$ - 15°C to calculate the ratio ($X_0/Y_2$) according to the following Relationship 1. The results are shown in Table 1 below.

$$[Relationship\ 1]$$
$$10 < X_0/Y_2 < 50$$

In Relationship 1, $X_0$ is the zero shear viscosity of the polyester resin at an angular frequency of 0.5 rad/s at $T_m$ - 15°C, and $Y_2$ is the shear viscosity of the polyester resin at an angular frequency of 500 rad/s at $T_m$ + 30°C.

**[Test Example 3]**

The polyester resins prepared in Examples 1 to 6 and Comparative Examples 1 to 4 were each measured for shear thinning using Physica MCR 301 equipment from Anton Paar as a plate-plate rheometer. Specifically, the plates with a diameter of 25 mm were placed in parallel at an interval of approximately 1 to 2 mm. The shear viscosity of each polyester resin was measured while the angular frequency was changed from 0.5 rad/s to 500 rad/s under a nitrogen atmosphere and a temperature of $T_m$ + 30°C and $T_m$ - 15°C to calculate the shear thinning at $T_m$ + 30°C ($ST_{Tm+30°C}$) according to the following Relationship 2 and the shear thinning at $T_m$ - 15°C ($ST_{Tm-15°C}$) according to the following Relationship 3. The results are shown in Table 1 below.

$$[Relationship\ 2]$$
$$ST_{Tm+30°C} = Y_1/Y_2$$

$$[Relationship\ 3]$$
$$ST_{Tm-15°C} = X_1/X_2$$

In Relationships 2 and 3, $Y_1$ is the shear viscosity of the polyester resin at an angular frequency of 0.5 rad/s at $T_m$ + 30°C, $Y_2$ is the shear viscosity of the polyester resin at an angular frequency of 500 rad/s at $T_m$ + 30°C, $X_1$ is the shear viscosity of the polyester resin at an angular frequency of 0.5 rad/s at $T_m$ - 15°C, and $X_2$ is the shear viscosity of the polyester resin at an angular frequency of 500 rad/s at $T_m$ - 15°C.

**[Test Example 4]**

The polyester resins prepared in Examples 1 to 6 and Comparative Examples 1 to 4 were each measured for loss modulus (at $T_m$ - 15°C) and storage modulus (at $T_m$ - 15°C) using Physica MCR 301 equipment from Anton Paar as a plate-plate rheometer, which were used to calculate the tandelta value according to the following Relationship 4, and the angular frequency when the tan delta value was 1 was then measured. The results are shown in Table 1 below.

$$[Relationship\ 4]$$

$$TD = LM/SM$$

In Relationship 4, LM is the loss modulus of the polyester resin at $T_m$ - 15°C, and SM is the storage modulus of the polyester resin at $T_m$ - 15°C.

[Table 1]

|  | Ex. 1 | Ex. 2 | Ex. 3 | Ex. 4 | Ex. 5 | Ex. 6 | C. Ex. 1 | C. Ex. 2 | C. Ex. 3 | C. Ex. 4 |
|---|---|---|---|---|---|---|---|---|---|---|
| $T_m$ (°C) | 230 | 240 | 235 | 250 | 225 | 230 | $T_m$ not appeared | 250 | 255 | 250 |
| $X_0$ (Pa·s) | 34800 | 25000 | 53600 | 20200 | 31800 | 24800 | - | 11800 | 4960 | 40490 |
| $Y_2$ (Pa·s) | 777 | 997 | 1490 | 1320 | 1110 | 1240 | - | 1320 | 714 | 757 |
| $X_0/Y_2$ | 44.8 | 25.1 | 36.0 | 15.3 | 28.6 | 20.0 | - | 8.9 | 6.9 | 53.5 |
| Angular frequency (rad/s) at tan delta = 1 | 79 | 199 | 126 | 79 | 20 | 15 | >500 | 315 | >500 | >500 |
| $ST_{Tm+30°C}$ | 7.4 | 5 | 10.6 | 6.5 | 13.5 | 12 | 5 | 3.5 | 2.02 | 12 |
| $ST_{Tm-15°C}$ | 21.3 | 18.4 | 19.6 | 25.5 | 30 | 28.6 | 10.96 | 12.5 | 7.4 | 12 |

Referring to Table 1 above, it was confirmed that the polyester resins of Examples 1 to 6 according to the present invention had crystallinity and exhibited a $T_m$ and that the ratio between zero shear viscosity and shear viscosity ($X_0/Y_2$), shear thinning, angular frequency, and the like were controlled to the ranges of the present invention.

**[Preparation Examples 1 to 6 and Comparative Preparation Examples 1 to 4]**

The polyester resins prepared in Examples 1 to 6 and Comparative Examples 1 to 4 were each used in an extrusion blow molding process to form a 2-liter container (bottle) with a width (diameter) of 15 cm and a height of 30 cm. In such an event, the extrusion blow molding process was carried out by feeding each polyester resin to a twin-screw extruder, setting the barrel temperature of the twin-screw extruder to a temperature higher than the melting point ($T_m$) of the polyester resin by 30°C and the die temperature of the twin-screw extruder to a temperature lower than the melting point ($T_m$) of the polyester resin by 15°C, preparing a preform(parison), and then blow molding it.

**[Test Example 5]**

The containers (bottles) prepared in Preparation Examples 1 to 6 and Comparative Preparation Examples 1 to 4 were each evaluated for processability (moldability) and quality according to the following evaluation criteria. The results are shown in Table 2 below.
* Evaluation criteria
◎: Molding of a container (bottle) was possible, and the surface of the container (bottle) was excellent.
○: Molding of a container (bottle) was possible, and the surface of the container (bottle) was good.
△: The thickness deviation of the container (bottle) (percentage of the difference between the thickest thickness ($D_{max}$) and the thinnest thickness ($D_{min}$) relative to the average thickness ($D_a$)) was 15% or more, resulting in uneven molding, and the surface of the container (bottle) was poor.

×: Molding of a container (bottle) was not possible, and the surface of the container (bottle) was poor.

[Table 2]

|  | Prep. Ex. 1 | Prep. Ex. 2 | Prep. Ex. 3 | Prep. Ex. 4 | Prep. Ex. 5 | Prep. Ex. 6 | C. Prep. Ex. 1 | C. Prep. Ex. 2 | C. Prep. Ex. 3 | C. Prep. Ex. 4 |
|---|---|---|---|---|---|---|---|---|---|---|
| Processability and quality | ◎ | ◎ | ◎ | ○ | ◎ | ○ | Δ | Δ | × | × |

Referring to Table 2 above, it was confirmed that the polyester resins of Examples 1 to 6 according to the present invention had excellent processability (moldability) in the extrusion blow molding process and that the containers (bottles) of Preparation Examples 1 to 6 prepared therefrom had excellent quality (appearance).

In contrast, it was confirmed that the polyester resins that did not have a melting point $(T_m)$ (Comparative Example 1), or whose ratio between zero shear viscosity and shear viscosity $(X_0/Y_2)$ was outside the range of the present invention (Comparative Examples 2 to 4), failed to secure processability in the extrusion blow molding process; thus, the containers (bottles) of Comparative Examples 1 to 4 prepared therefrom were poor in quality.

**Claims**

1. A polyester resin, which comprises a diol repeat unit derived from a diol component; and a dicarboxylic acid repeat unit derived from a dicarboxylic acid component, wherein, when the polyester resin is analyzed by differential scanning calorimetry (DSC) while the temperature is raised to 280°C at a scan rate of 10°C/minute, a melting point $(T_m)$ appears, and the following Relationship 1 is satisfied:

$$[\text{Relationship 1}]$$
$$10 < X_0/Y_2 < 50$$

in Relationship 1, $X_0$ is the zero shear viscosity of the polyester resin at an angular frequency of 0.5 rad/s at $T_m$ - 15°C, and $Y_2$ is the shear viscosity of the polyester resin at an angular frequency of 500 rad/s at $T_m$ + 30°C.

2. The polyester resin of claim 1, which has a shear thinning $(ST_{Tm+30°C})$ of 4 to 15 at $T_m$ + 30°C as represented by the following Relationship 2:

$$[\text{Relationship 2}]$$
$$ST_{Tm+30°C} = Y_1/Y_2$$

in Relationship 2, $Y_1$ is the shear viscosity of the polyester resin at an angular frequency of 0.5 rad/s at $T_m$ + 30°C, and $Y_2$ is the shear viscosity of the polyester resin at an angular frequency of 500 rad/s at $T_m$ + 30°C.

3. The polyester resin of claim 1, which has a shear thinning $(ST_{Tm-15°C})$ of 15 to 30 at $T_m$ - 15°C as represented by the following Relationship 3:

$$[\text{Relationship 3}]$$
$$ST_{Tm-15°C} = X_1/X_2$$

in Relationship 3, $X_1$ is the shear viscosity of the polyester resin at an angular frequency of 0.5 rad/s at $T_m$ - 15°C, and $X_2$ is the shear viscosity of the polyester resin at an angular frequency of 500 rad/s at $T_m$ - 15°C.

4. The polyester resin of claim 1, which has an angular frequency of 200 rad/s or less when the tandelta (TD) at $T_m$ - 15°C is 1 as represented by the following Relationship 4:

[Relationship 4]

$$TD = LM/SM$$

in Relationship 4, LM is the loss modulus of the polyester resin at $T_m$ - 15°C, and SM is the storage modulus of the polyester resin at $T_m$ - 15°C.

5. The polyester resin of claim 1, which has a melting point ($T_m$) of 210 to 260°C.

6. The polyester resin of claim 1, wherein the dicarboxylic acid component comprises at least one selected from the group consisting of recycled terephthalic acid, terephthalic acid, isophthalic acid, dimethyl phthalate, dimethyl isophthalate, dimethyl terephthalate, phthalic acid, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

7. The polyester resin of claim 1, wherein the diol component comprises at least one selected from the group consisting of ethylene glycol, cyclohexanedimethanol, isosorbide, diethylene glycol, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, bis-2-hydroxyethyl terephthalate, recycled ethylene glycol, recycled cyclohexanedimethanol, recycled isosorbide, recycled diethylene glycol, recycled neopentyl glycol, and recycled bis-2-hydroxyethyl terephthalate.

8. The polyester resin of claim 1, wherein the diol component comprises a first diol component comprising at least one selected from the group consisting of ethylene glycol and recycled ethylene glycol; and a second diol component comprising at least one selected from the group consisting of cyclohexanedimethanol, isosorbide, diethylene glycol, neopentyl glycol, bis-2-hydroxyethyl terephthalate, recycled cyclohexanedimethanol, recycled isosorbide, recycled diethylene glycol, recycled neopentyl glycol, and recycled bis-2-hydroxyethyl terephthalate.

9. The polyester resin of claim 1, which further comprises a repeat unit derived from a branching agent having 3 or more functional groups.

10. The polyester resin of claim 9, wherein the content of the repeat unit derived from the branching agent is 0.005 to 15% by weight based on the total percent by weight of the diol repeat unit.

11. The polyester resin of claim 1, which has an intrinsic viscosity (IV) of 0.6 to 1.4 dl/g.

12. A molded article, which is prepared from the polyester resin according to any one of claims 1 to 11.

13. The molded article of claim 12, which is prepared through an extrusion blow molding process.

14. A process for preparing a molded article, which comprises:

feeding the polyester resin according to any one of claims 1 to 11 to an extruder;
processing the polyester resin fed to the extruder with a barrel at a temperature higher than the melting point ($T_m$) of the polyester resin by 10 to 40°C;
discharging the processed polyester resin through a die at a temperature lower than the melting point ($T_m$) of the polyester resin by 10 to 30°C to prepare a preform; and
blow molding the preform.

## INTERNATIONAL SEARCH REPORT

| | International application No. |
|---|---|
| | **PCT/KR2024/006790** |

| | |
|---|---|
| **A.** | **CLASSIFICATION OF SUBJECT MATTER** |
| | **C08G 63/16**(2006.01)i; **B29C 49/00**(2006.01)i |

According to International Patent Classification (IPC) or to both national classification and IPC

| | |
|---|---|
| **B.** | **FIELDS SEARCHED** |

Minimum documentation searched (classification system followed by classification symbols)

C08G 63/16(2006.01); B29C 49/04(2006.01); C08G 63/181(2006.01); C08G 63/183(2006.01); C08G 63/199(2006.01); C08J 9/12(2006.01); C08L 67/00(2006.01); C08L 67/02(2006.01); G01N 11/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 전단점도(shear viscosity), 영전단점도(zero shear viscosity), 압출취입성형(extrusion blow molding)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2016-027074 A (UNITIKA LTD. et al.) 18 February 2016 (2016-02-18)<br>See claims 1 and 2; and paragraphs [0012]-[0017]. | 1-14 |
| A | KR 10-2021-0125280 A (LG CHEM, LTD.) 18 October 2021 (2021-10-18)<br>See claims 1-15. | 1-14 |
| A | JP 10-298335 A (KANEGAFUCHI CHEM. IND. CO., LTD.) 10 November 1998 (1998-11-10)<br>See claims 1-4. | 1-14 |
| A | US 2009-0264545 A1 (SEQUEIRA, C.) 22 October 2009 (2009-10-22)<br>See claims 1-65. | 1-14 |
| A | KR 10-2016-0059287 A (LOTTE CHEMICAL CORPORATION) 26 May 2016 (2016-05-26)<br>See claims 1-11. | 1-14 |

☐ Further documents are listed in the continuation of Box C.　　☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 August 2024** | **30 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006790**

| Patent document cited in search report | | | Publication date (day/month/year) | Patent family member(s) | | | Publication date (day/month/year) |
|---|---|---|---|---|---|---|---|
| JP | 2016-027074 | A | 18 February 2016 | None | | | |
| KR | 10-2021-0125280 | A | 18 October 2021 | JP | 6456116 | B2 | 23 January 2019 |
| JP | 10-298335 | A | 10 November 1998 | None | | | |
| US | 2009-0264545 | A1 | 22 October 2009 | CA | 2663336 | A1 | 18 October 2009 |
| | | | | CA | 2663336 | C | 25 June 2013 |
| | | | | EP | 2268737 | A1 | 05 January 2011 |
| | | | | EP | 2268737 | B1 | 16 January 2019 |
| | | | | ES | 2718245 | T3 | 28 June 2019 |
| | | | | PL | 2268737 | T3 | 30 September 2019 |
| | | | | TR | 201904238 | T4 | 22 April 2019 |
| | | | | US | 2013-0216753 | A1 | 22 August 2013 |
| | | | | US | 8404755 | B2 | 26 March 2013 |
| | | | | US | 8771583 | B2 | 08 July 2014 |
| | | | | WO | 2009-129469 | A1 | 22 October 2009 |
| KR | 10-2016-0059287 | A | 26 May 2016 | KR | 10-1694892 | B1 | 10 January 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4217440 A